(19) **Europäisches Patentamt**
**European Patent Office**
**Office européen des brevets**

(11) **EP 2 289 644 B1**

(12) **EUROPEAN PATENT SPECIFICATION**

(45) Date of publication and mention
of the grant of the patent:
**21.03.2012 Bulletin 2012/12**

(51) Int Cl.:
*B21D 22/20* (2006.01)     *B21D 24/10* (2006.01)
*G05B 19/00* (2006.01)

(21) Application number: **10181813.6**

(22) Date of filing: **10.11.2004**

(54) **Press-forming method, press-forming device, computer program product and storage medium**

Pressformungsverfahren, Pressformungsvorrichtung, Computerprogrammprodukt und Speichermedium

Procédé de formation de presse, dispositif de formation de presse, produit de programme informatique et support de stockage

(84) Designated Contracting States:
**AT BE BG CH CY CZ DE DK EE ES FI FR GB GR HU IE IS IT LI LU MC NL PL PT RO SE SI SK TR**

(30) Priority: **11.11.2003 JP 2003381285**
**10.09.2004 JP 2004264022**

(43) Date of publication of application:
**02.03.2011 Bulletin 2011/09**

(62) Document number(s) of the earlier application(s) in accordance with Art. 76 EPC:
**08166444.3 / 2 025 425**
**04818248.9 / 1 688 196**

(73) Proprietors:
• **Nippon Steel Corporation**
**Tokyo 100-8071 (JP)**
• **ArcelorMittal France**
**93200 Saint Denis (FR)**

(72) Inventors:
• **Suzuki, Noriyuki**
**Futtsu-shi Chiba 293-8511 (JP)**
• **Yamagata, Mitsuharu**
**Futtsu-shi Chiba 293-8511 (JP)**
• **Uenishi, Akihiro**
**Futtsu-shi Chiba 293-8511 (JP)**
• **Kuriyama, Yukihisa**
**Futtsu-shi Chiba 293-8511 (JP)**
• **Niwa, Toshiyuki**
**Futtsu-shi Chiba 293-8511 (JP)**
• **Kuwayama, Takuya**
**Futtsu-shi Chiba 293-8511 (JP)**

(74) Representative: **Vossius & Partner**
**Siebertstrasse 4**
**81675 München (DE)**

(56) References cited:
**EP-A1- 0 675 419     JP-A- 5 285 554**
**JP-A- 7 266 100     US-A1- 4 592 220**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a press-forming method, a press-forming device, a computer program product and a storage medium, and in particular, relates to a suitable technology to be used for a favorable processing irrespective of characteristic deviation of various metal materials such as iron series, nonferrous series, stacked materials and the like, or environmental fluctuations during processing.

Background Art

Conventionally, when performing deep-drawing, bending, cutting, or the like to a metal material, using a press-fo.rming device, it is usual to carry out actual production after determining appropriate forming conditions, namely, processing conditions such as the shape of metal molds, lubricating condition, forming speed, blank holding force, the temperature of metal molds and work, and so on for every metal material in advance by trial production through experience, or through experiment, or by simulation or the like using a finite-element method.

Whereas, various metal materials being a raw material are plates, pipes, bars, wires, powder or grains, and the like obtained through multiple processes of melting-smelting-casting-rolling-heat treatment-secondary processing and so on from raw material or scraps, and there inevitably exists some extent of deviation in mechanical properties in a product due to fluctuation of chemical components, or fluctuation of processing conditions such as uneven temperatures.

Accordingly, even when appropriate forming conditions are determined in advance as described above, occurrence of forming defect may arise due to differences in formability according to material positions or production lot numbers. In order to avoid this defect, execution of quality control during material production process is performed more severely, but excess severity may lead to material cost increase, and is not recommendable.

Moreover, even when the mechanical characteristics of raw material are identical, occurrence of forming defect may arise due to environmental fluctuation during processing such as temperature change of metal mold caused by continuous operation, abrasion of.metal mold, fluctuation of atmospheric temperature or humidity.

As a countermeasure against these disadvantages, various inventions for a press-forming method to control processing conditions according to metal material or conditions of a metal mold have been disclosed. For instance, in Patent Document 1, disclosed is a device to control air pressure in an air cylinder to carry out press-forming under an appropriate blank holding force by determining in advance a relation between a physical quantity such as a shape of press material and its mechanical property, chemical property, a laminate lawyer property of plating or the like, and surface conditions such as oil quantity or the like; and an appropriate blank holding force from which prescribed press quality is obtained; and by determining the appropriate blank holding force according to actual physical quantity from the above-described relation.

Patent Documents 2 and 3 disclose a device which adjusts press conditions based on machine information and metal mold information peculiar to a press machine.

Patent Documents 4, 5, and 6 disclose various methods to adjust to prescribed bending angles in a bending process using a press brake.

The inventions disclosed in Patent Documents 1 to 3 and the like are aimed at controlling blank holding force based on material characteristics, information peculiar to a machine, and metal mold information. However, since lubrication characteristics, especially with metal molds, vary from moment to moment by the synergistic effect of the fluctuation of material characteristics and the fluctuation of machine and mold conditions, it is very difficult to estimate it in advance.

The inventions disclosed in Patent Documents 4 to 6 are aimed at adjusting the processing conditions according to the state of deformation during processing of the work in a bending process, but it is difficult to measure complicated three-dimensional shape on the spot in drawing or cutting. Further, since material is cramped with a metal mold during drawing or cutting, there have been very difficult problems in measuring the material shape precisely.

EP0 675 419 A discloses a method for optimizing an operating condition of a press, wherein an optimum blank-holding force is automatically adjusted by adjusting a measurable control parameter such as air cylinder pressure to an optimum value. The optimum pressure is automatically adjusted when the ambient temperature has been changed.

The present invention has been made in view of the above-described problems, and the object of the invention is to find a method to perform satisfactory press-forming while compensating deviation of various material characteristics and environmental fluctuation during processing.

Patent Document 1: Japanese Patent Application Laid-open No. Hei 7-266100
Patent Document 2: Japanese Patent Application Laid-open No. Hei 5-285700
Patent Document 3: Japanese Patent Application Laid-open No. Hei 6-246499

Patent Document 4: Japanese Patent Application Laid-open No. Hei 7-265957
Patent Document 5: Japanese Patent Application Laid-open No. Hei 10-128451
Patent Document 6: Japanese Patent Application Laid-open No. Hei 8-300048

Summary of the Invention

The press-forming device and the method of the present invention are to obtain a satisfactory press molding product by grasping and computation controlling at least two or more means out of a material characteristic input means, a material characteristic measurement means, or a state variable detector for the fluctuation of material characteristics or lubrication characteristic between a metal mold and a work, which are conventionally difficult to estimate. This is achieved with the features of the claims.

Brief Description of the Drawings

Fig. 1 is a view showing a diagrammatic structure of a press-forming device of an embodiment;
Fig. 2 is a flow chart showing a procedure of the press-forming;
Fig. 3 is a view showing an example of an influence function matrix relating to material characteristics and standard processing conditions;
Fig. 4 is a view showing an example of an influence function matrix relating to state variables and corrected processing conditions;
Fig. 5 is a view showing an example of reference values of material characteristics;
Fig. 6 is a view showing an example of standard processing conditions;
Fig. 7 is a view showing another example of an influence function matrix relating to material characteristics and standard processing conditions;
Fig. 8 is a view showing an example of reference values of state variables;
Fig. 9 is a view showing another example of an influence function matrix relating to state variables and corrected processing conditions;
Fig. 10 is a view showing an example to attach an IC tag to a cut plate package;
Fig. 11 is a view showing an example to attach an IC tag to a material coil;
Fig. 12 is a view showing an example to attach a bar code to a cut plate material; and
Fig. 13 is a characteristic figure showing a relation between.punch reaction and blank holding force.

Detailed Description of the Preferred Embodiments

-First Embodiment-

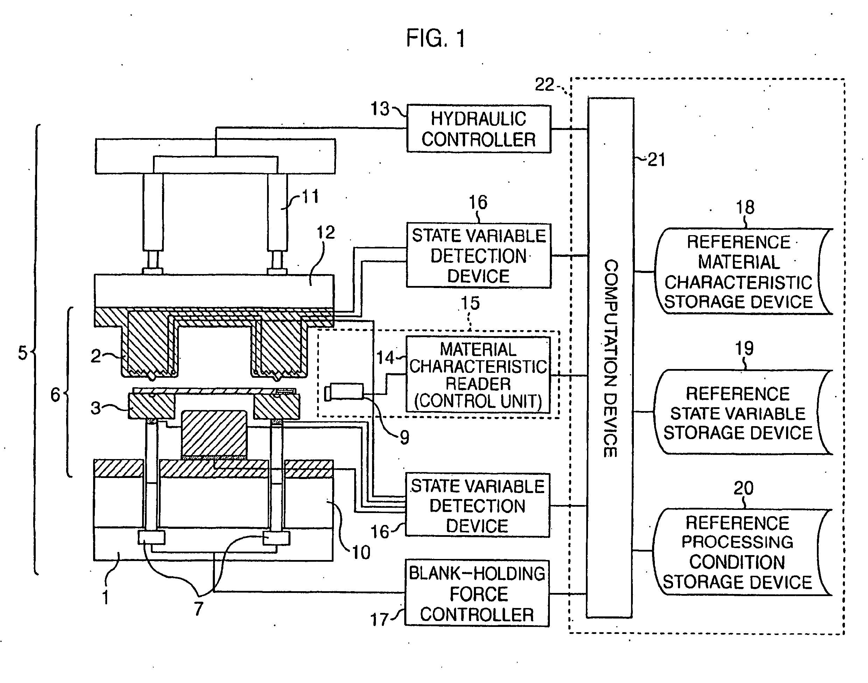

Hereinafter, preferable embodiments of a press-forming device, a press-forming method, a computer program, and a storage medium will be explained referring to the drawings. Fig. 1 shows a diagrammatic structure of a press-forming device of an embodiment to which the present invention is applied.

More concretely, in a press-forming device 5, "1".denotes a punch, "2" denotes a die, "3" denotes a blank holder, and "6" denotes a metal mold device. "7" denotes a state variable sensor (load cell), and other than these, there is provided a state variable sensor (a thermocouple). "10" denotes an air cylinder, "11" denotes a hydraulic cylinder, and "12" denotes a heater.

"15" denotes a material characteristic reader which includes a material characteristic reader (IC tag reader) 9 and a material characteristic reader (controller) 14.

"13" denotes a hydraulic controller. "16" denotes a state variable detection device. "17" denotes a blank holding force controller.

"22" denotes a control computer, which includes a standard material characteristic storage device 18, a reference state variable storage device 19, a standard processing condition storage device 20, and an arithmetic unit 21. The control computer 22 of the present embodiment is composed of a computer system including a CPU, a RAM and a ROM, and a processing condition controller, a material characteristic input means, a state variable detector, a processing condition computer, a material characteristic measurement means, and the like of the present embodiment are programmed by the computer system.

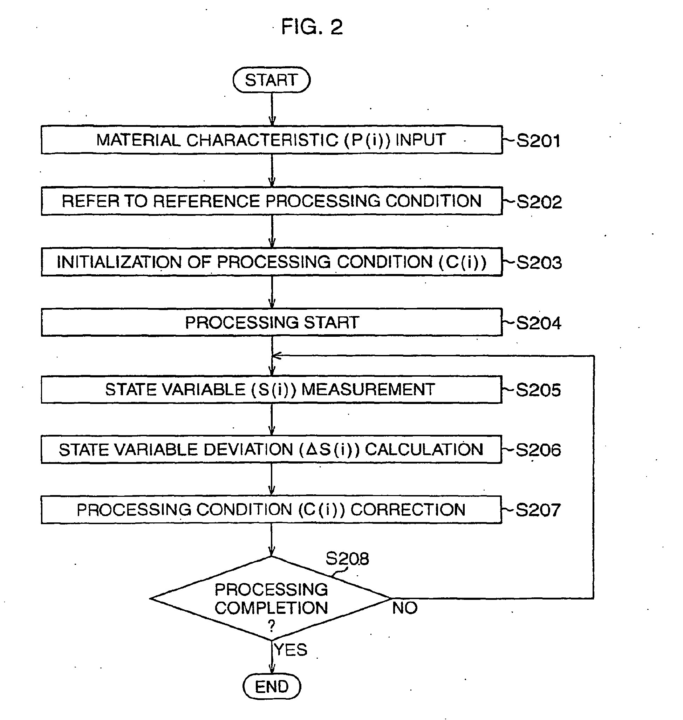

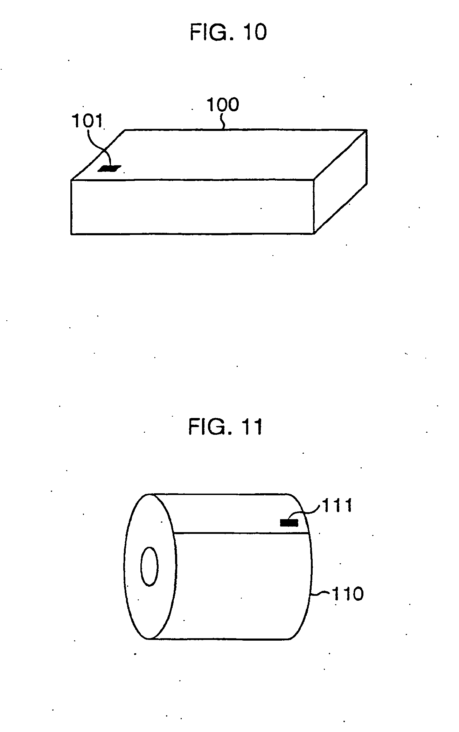

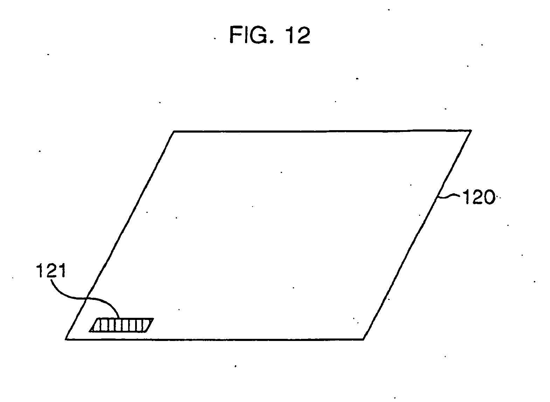

A procedure of a press-forming method of the present embodiment will be explained next referring to Fig. 2. A metal material is read by the above-described material characteristic reader 15 from an IC tag (refer to Figs. 10 and 11) or a bar code (refer to Fig. 12) pasted on the surface of the metal material at a stage of being set to the press-forming device 5. The material characteristic information thus read is inputted by the material characteristic input means (Step S201). Here, the material characteristic is one kind or a combination of two or more kinds of the following characteristics: sheet thickness, yield strength, 0.2% proof stress, tensile strength, elongation, n value, r value, coefficient of stress-strain relation equation, table showing each point value approximated to the stress-strain relation with a line graph, hardness, temperature, surface roughness, friction coefficient, and lubricant film thickness and so on for every material.

As a means to input material characteristics, the material characteristics are directly read here for every material from a bar code or an IC tag. When the amount of data is great, it is also adoptable to read an ID (identification) number from a bar code or an IC tag and receive the real valued data corresponding to the identification number from a server via a network or to input directly from a mill sheet, a flexible disc or the like attached from a material manufacturer for every coil material into the material characteristic input device.

In general, when performing press processing; since the material is cut in an appropriate size from, for instance, a coiled material before the material is set in a press machine, and heat treatment or surface treatment is given in some cases, it is often difficult to obtain the above-described material characteristic in advance.

For this problem, it is possible to obtain further precise material characteristic information by directly measuring one kind or combination of two or more kinds among the above-described material characteristics, or more preferably, from easiness of measurement, one kinds or a combination of two kinds or more out of sheet thickness, hardness, temperature, friction coefficient, and lubricant film thickness, before the material is set to a press-forming device 5 or just at the time of setting.

Then, initialization values of processing condition are corrected (Steps S202, and S203) based on the read material characteristic values and the reference material characteristic values to the material stored in the reference material characteristic storage device 18 in advance. Here, the processing condition is one kinds or a combination of two or more kinds of forming speed, blank holding force, and metal mold temperature.

A concrete correction method of a processing condition will be shown next. Material characteristic values to the respective material characteristics are taken respectively as $P(j)(j = 1\text{-}M$; where M is the number of the material characteristic values), the reference values for the respective material characteristics are taken as $PO(j)(j = 1\text{-}M)$. The initialization values to the above-described respective standard processing conditions are taken respectively as $CO(i)(i = 1\text{-}L$, where L is the number of processing condition set values). An influence function matrix which indicates the relation between the deviation of the material characteristic of a material from its reference value and the amount of correction of the processing condition is taken as $T1 (I, j)$, and the initialization value of the processing condition is corrected with the following equation (1).

$$CO(i) \ (after \ correction) \ = \ CO(i) \ (initialization \ value) \times (1 + \Sigma \ (T1(ij) \times (P(j)/PO(j)-1))) \ (i \ = \ 1\text{-}L, \ j \ = \ 1\text{-}M) \cdots (1)$$

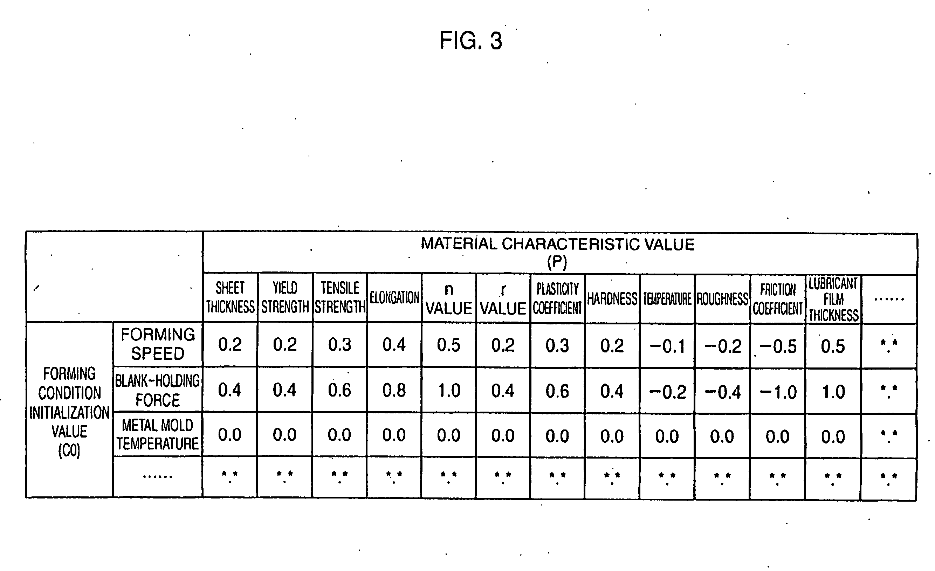

The setting value CO(j) of the standard processing condition may be a fixed value during forming, and when it is changed during forming, for instance, a setting value to each punch stroke amount may be given A formation example of the influence function matrix T1 is shown in Fig. 3. When the sheet thickness is, for instance, thicker than the reference value by 1%, the function of T1 corresponds to that the forming speed and blank holding force are increased by 0.2% and 0.4% respectively, and there is no change for the metal mold temperature, using the equation (1).

Each component of the influence function matrix can be determined from the following methods: a method to determine from the change (sensibility analysis) of the optimum forming condition to the change of various material characteristics using a forming simulation by a finite element method; a method to statistically determine from a relation between material characteristic variation and processing condition, product quality (cracks, creases, spring back, surface distortion, and the like) in actual mass production press process; a method to input actual measurement value on product quality into the press-forming device as instruction data and prepare and update using, for instance, a learning function by a neural network; or the like. Note that formation of material characteristic value and processing condition or formulation method is not limited to the above, and arbitral setting is also adoptable.

Then, based on initial processing conditions, using the blank holding force controller, a forming speed controller, and a metal mold temperature controller, a load is applied on the blank holder, an upper metal mold is descended and forming is started (Step S204). Note that controllers are not limited to these, other controlling means, either single or a combination of multiple means, any arbitrary form is adoptable.

During processing, using the state variable detection device 16, at least one state variable out of punch reaction, metal mold temperature, metal mold distortion amount, work piece deformation amount, work piece temperature, and the like is measured, and the processing condition is corrected from moment to moment by a processing condition computer (Steps S205 to S208).

Concretely, processing conditions are corrected from moment to moment according to the following equation (2),

$$C(i) = CO(i) \times (1 + \Sigma \ (T2(i,k) \times (S(k)/SO(k)-1))) \ (i = 1-L, \ k = 1-N) \cdots (2)$$

where the state variable is S.(k) (k = 1-N; where N is the number of the state variable), reference state variable stored in the reference state variable storage device is SO(k) (k = 1-N), correction values for the respective processing conditions is C(i) (i = 1-L), the influence function matrix indicating a relation between deviation of measured each state variable to its reference value and correction amount of the processing condition is T2(i, k) (i = 1-L, k = 1-N).

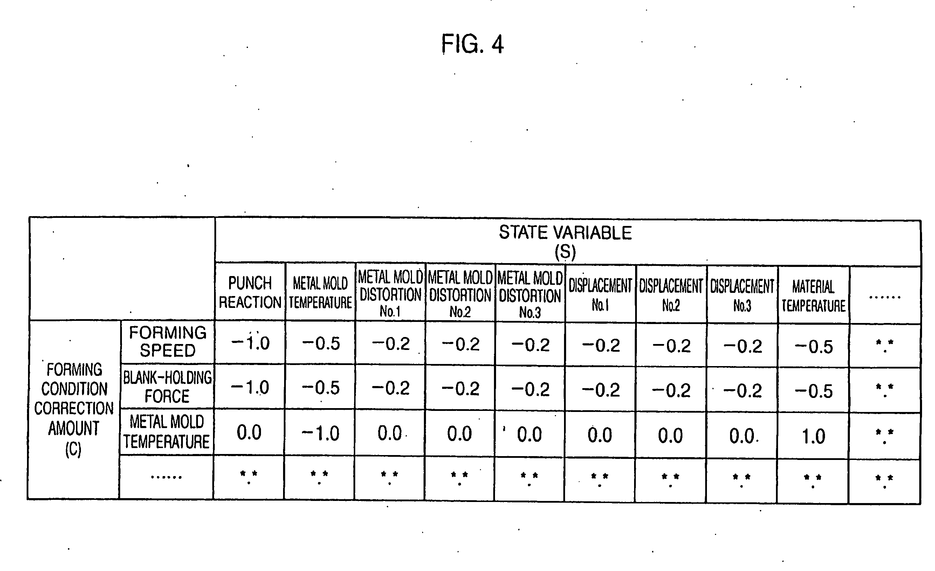

A formation example of the influence function matrix.T2 is shown in Fig. 4. When the punch reaction is, for instance, higher than the reference value by 1%, the function of the influence function matrix T2 corresponds to that, using the above-described equation (2), the forming speed and blank holding force are decreased by 1% and 0.5% respectively and there is no change for the metal mold temperature. It has been known that each component of the influence function matrix T2 can be determined from a method to determine from the change (sensibility analysis) of the optimum forming condition to the change of various material characteristics using a forming simulation by a finite element method, similarly to the above-described influence function matrix T1.

Further, there are a method to statistically determine from a relation between state variable variation and processing condition, product quality (crack, creases, spring back, surface distortion, and the like) in actual mass production press process, a method to input actual measurement value on product quality into the press-forming device as instruction data and prepare and update using, for instance, a learning function by a neural network, or.the like. Note that formation of state variable or formulation method is not limited to the above, and arbitral setting is also adoptable.

Here, a method to correct the forming conditions based on three pieces of information on the material characteristic inputted in advance, the material characteristic measured just before the press-forming, and the state variable during forming is explained. It is insufficient to correct the forming conditions based on only one piece of information out of three pieces of the above-described information, therefore it is desirable to do so based on at least two or more pieces of information to perform highly reliable control.

Because it is impossible to avoid influence of disturbance which is difficult to predict in advance such as a lubrication condition during forming or the like with only one piece of information of material characteristic inputted in advance or material characteristic measured just before press-forming. Furthermore, there is a problem in that it is impossible to separate influence due to material characteristic deviations with only the state variable during forming. This is because reduction effect of material characteristic deviations or product quality deviations caused by disturbance during forming cannot be obtained satisfactorily.

-Embodiment-

As an embodiment, a press-forming device shown in Fig. 1 is prepared and press-forming is performed using a thin steel plate. As for material characteristics, sheet thickness and hardness are measured for every blank, and typical mechanical properties attached by a material manufacturer.for every coil are used for yield strength or 0.2% proof stress, tensile strength, and total elongation and inputted into a material characteristic input means for every blank respectively. As a state variable during forming, a punch reaction is monitored using a load cell, the metal mold temperature is monitored using a thermocouple and the forming speed, blank holding force are controlled based on the equations (1) and (2).

In the above-described procedure, 4 points of sheet thickness, yield strength, 0.2% proof stress, tensile strength, total elongation, and hardness are used as the material characteristic value P(j) (j = 1-5), two points of forming speed, and blank holding force are used as the processing condition C(i) (i = 1-2), and N points of punch reaction (N-1 point) for every punch stroke and metal mold temperature are used as the state variable S(k) (k = 1-N).

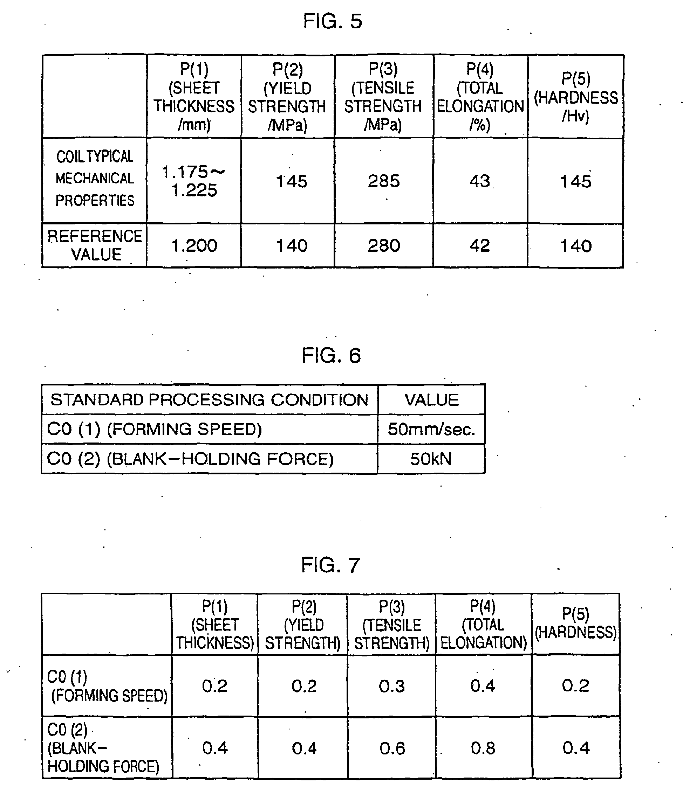

As a raw material, a "150 mm" blank stamped from the same cold rolling coil for deep drawing having an average thickness of 1.2 mm and a width of 1000 mm is used to perform "50 mm" square cup drawing with a forming height of "40 mm". Typical mechanical properties and the reference values of the coil are shown in Fig. 5.

Standard processing conditions for the typical characteristics of this material are shown in Fig. 6. Then, based on the actual measurement value for the sheet thickness and the typical mechanical properties of the coil inputted for every one sheet of the blank, initialization of the processing conditions are performed using the influence function matrix T1 shown by the equation (1) and in Fig. 7 and forming is started.

During processing, forming is performed without changing the initialization during forming in example 1, in other words, forming conditions are set based on the material characteristics inputted in advance and the material characteristics measured before forming, and forming is performed without using a state variable during forming, and the forming speed and blank holding force set to be constant.

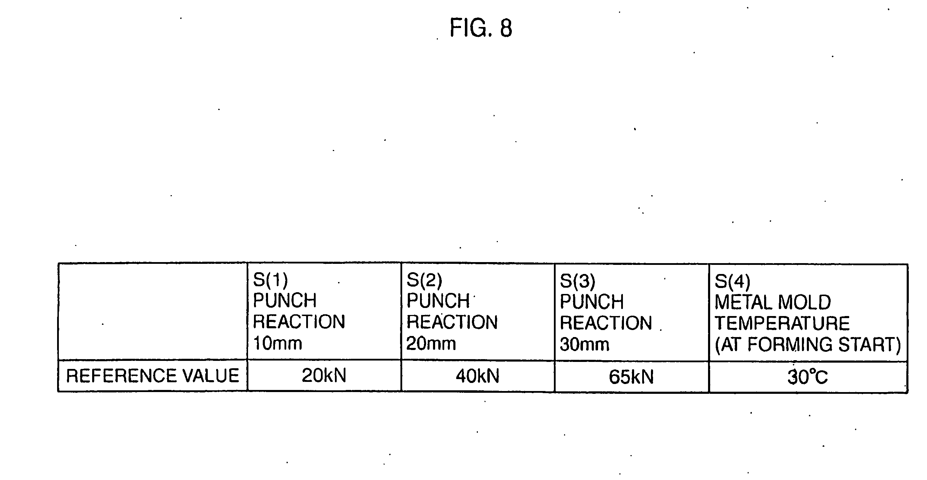

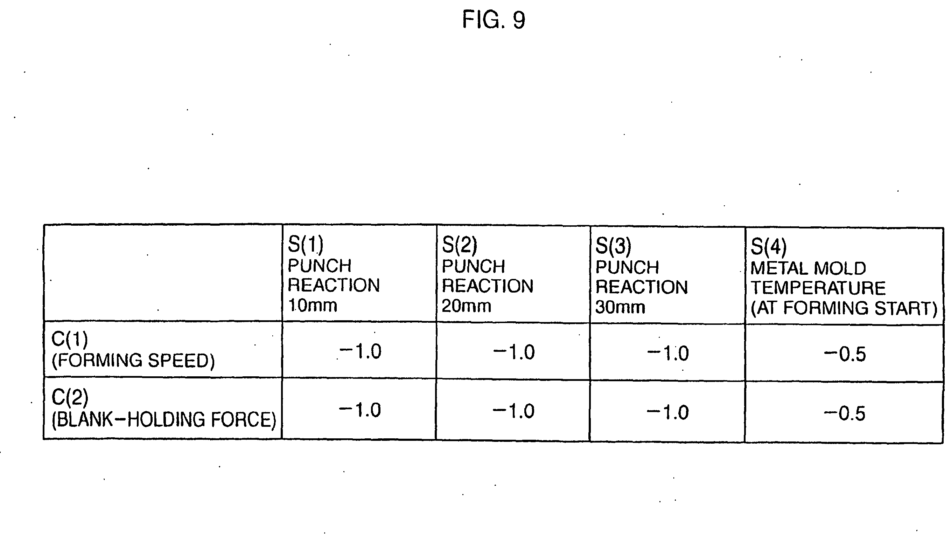

In example 2, the punch reaction and the metal mold temperature are measured for every 10 mm stroke until the maximum punch stroke (=forming height 40 mm), taking the punch reaction and the metal temperature at the time of obtaining a good product under the same processing conditions by a trial pressing in advance as reference values of the state variable shown in Fig. 8, using the influence function T2 shown in Fig. 9, forming speed and blank holding force are adjusted with the equation (2). In other words, the press conditions are controlled using the material characteristics inputted in advance, the material characteristics measured before forming, and the state variable during forming.

In example 3, using measured value of only sheet thickness and hardness for every one blank sheet, without using material characteristics such as yield strength or 0.2% proof stress, tensile strength, and total elongation, the punch reaction and the metal mold temperature are measured for every 10 mm stroke until the maximum punch stroke (=forming height 40 mm) similarly to the manner in embodiment 2, taking the punch reaction and the metal temperature at the time of obtaining a good product under the same processing conditions by a trial pressing in advance as reference values of the state variable shown in Fig. 8, using the influence function T2 shown in Fig. 9, forming speed and blank holding force are adjusted with the equation (2). In other words, the press conditions are controlled using the material characteristics measured before forming, and the state variable during forming.

In example 4, using only material characteristics inputted in advance: yield strength or 0.2% proof stress, tensile strength, and total elongation, similarly to embodiment 2, the punch reaction and the metal mold temperature are measured for every 10 mm stroke until the maximum punch stroke (=forming height 40 mm), taking the punch reaction and the metal temperature at the time of obtaining a good product under the same processing conditions by a trial pressing in advance as reference values of the state variable shown in Fig. 8, using the influence function T2 shown in Fig. 9, forming speed and blank holding force are adjusted with the equation (2). In other words, the press conditions are controlled using the material characteristics inputted in advance, and the state variable during forming.

As a comparison example, using forming speed and blank holding force without changing processing conditions to the reference material characteristics, forming is performed without correcting the reference processing conditions during forming.

The above-described forming experiment is carried out by punching total 1000 pieces of blanks from the same coil, percent defective due to occurrence of cracks and creases are compared. sheet thickness standard deviation : 5 μm percent detective :

| (Example 1 | ) | 0.9% |
| (Example 2 | ) | 0.1% |
| (Example 3 | ) | 0.5% |
| (Example 4 | ) | 0. 5% |
| (Comparative Example) | | 1.2% |

The percent defective is reduced by changing the initialization of the processing conditions according to the deviation of the sheet thickness, and the percent defective is further reduced by adjusting the processing condition according to punch reaction and metal mold temperature during forming.

Fig. 10 shows an example of a cut plate package 100 supplied from a coil processing center, to which an IC tag 101 is attached. Information such as "tensile strength", "yield strength or 0.2% proof stress", "total elongation", "sheet thickness", "production date" and the like are stored in the IC tag 101. The information is read with the material characteristic reader (IC tag reader) 9, and is transmitted to the computation device 21, thereby saving the labor that would otherwise be incurred if the data were inputted manually..

Fig. 11 shows an example to attach an IC tag 111 to a material coil 110. Also in the case of this example, information such as "tensile strength", "yield strength or 0.2% proof stress", "total elongation", "sheet thickness", "production date" and the like is stored in the IC tag 111. Therefore, it becomes possible to save labor to manually input the material characteristics when the material coil 110 is pressed.

Fig. 12 shows an example to attach a bar code 121 to a cut plate material 120. Information showing a product lot number is displayed on the bar code 121. By reading the information with a bar code reader in the material characteristics reader, information relating to the corresponding material can be obtained from, for instance, a server computer on a network.

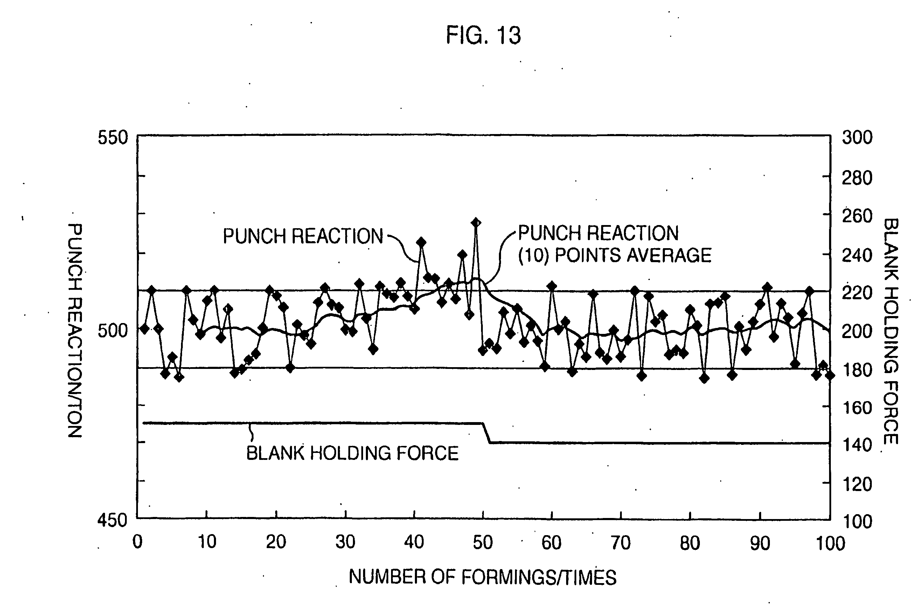

Next, an example in the case of performing press-forming is explained with reference to Fig. 13. In Fig. 13, punch reactions and blank holding forces are expressed along the vertical axis, and the number of forming times is expressed along the horizontal axis. In Fig. 13, a black rhombus denotes a punch reaction during one time of forming.

In this example, the punch reaction maximum value during forming is captured and stored in a computer for every one time of forming. Further, the moving average of the punch reaction maximum values is calculated and an example of controlling to change the blank holding force when the punch reaction maximum value exceeds a prescribed value (in an example in Fig. 13, 500 ton $\pm$ 10 ton) is shown.

As a result, as shown in Fig. 13, since the 10 points moving average value exceeds a permissible range, forming is carried out under reduced blank holding force from fiftieth times. As a result, the punch reaction maximum value can be kept within the prescribed value, forming of prescribed number of sheets can be achieved without occurrence of a defective piece.

It should be noted that.in the above explanation, an example in which the punch reaction maximum value during processing is taken in a computer for every one time of forming is shown, but it may be taken in for every prescribed time. Furthermore, in an example in Fig. 13, an example in which the blank holding force is reduced from the fiftieth times because the 10 point moving average exceeds a permissible range is shown, however, on the contrary, the blank holding force may be increased when the moving average value falls short of the permissible range.

In the above explanation, the blank holding force is adjusted using the history of the punch reaction maximum values. However, the present invention is not limited to this, and it is also adoptable to adjust other processing condition, for instance, the forming speed or the like using a history of other state variables for instance, the metal mold temperature, the metal mold distortion amount, or the like.

-Other Embodiments-

As explained above, the control computer 22 includes a computer CPU or MPU, RAM, ROM, RAM, and the like, and a press-forming method of the present embodiment is realized by operating a program stored in the above-described RAM, ROM, or the like.

Accordingly, the program itself realizes the function of the above-described embodiment, which constitutes the present invention. As a program transmission medium, a communication medium (wire circuit such as optical fiber or wireless circuit or the like) in a computer net work system (LAN, WAN such as internet, wireless communication network or the like) to propagate and supply program information as a carrier wave can be used.

Further, a means supplying the above-described program to a computer, for instance, a storage medium storing such a program composes the present invention. As such a storage medium, for instance, a flexible disc, hard disc, optical disc, magneto-optic disc, CD-ROM, magnetic tape, nonvolatile memory card, ROM, or the like can be used.

The present embodiments are to be considered in all respects as illustrative, and all changes which come within the scope of the claims are therefore intended to be embraced therein.

Industrial Applicability

According to the present invention, it is possible to obtain appropriate processing conditions avoiding an influence due to unpredictable deviation factors such as variation in material characteristics, environmental change, lubricity between a metal mold and work, surface property, and the like, and it is possible to always obtain a favorable product.

**Claims**

1. A press-forming method using a press-forming device having a punch (1), die (2) and blank holder (3), and press-forming a material according to a prescribed forming condition, comprising the steps of:

   measuring, during forming of said material from moment to moment, N state variables including at least one state variable out of the state variables of punch reaction, metal mold temperature, metal mold distortion amount, work piece deformation amount, or work piece temperature, where N is an integer of 2 or more; **characterised in that** the method further comprises the steps of:

   computing, from moment to moment, L processing conditions including at least one processing condition out of processing conditions of forming speed, blank holding force, or metal mold temperature, by using an equation including an influence function matrix indicating a relation between a deviation of each state variable measured during forming to its reference value and a correction amount of the processing condition, where L is an integer of 2 or more; and

   controlling at least one or more processing conditions out of the processing conditions including a punch or die movement speed, metal mold temperature or blank holding force based on the processing conditions computed by the processing condition computation step.

**2.** The method according to claim 1, wherein said equation is

$$C(i) = CO(i) \times \{1 + \Sigma \ (T2(i,k) \times (S(k)/SO(k)-1))\},$$

where

S(k) (k=1~N) is a k-th state variable,
C(i) (i=1~L) is an i-th processing condition,
SO(k) is a reference value of the k-th state variable,
CO(i) is an initialization value of the i-th processing condition, and
T2(i,k) is an influence function matrix of N x L values, the k-th x i-th value indicating a relation between a deviation of the measured k-th state variable S(k) to its reference value S0(k) and a correction amount of the i-th processing condition.

**3.** A press-forming device having a punch (1), die (2) and blank holder (3), and press-forming a material according to a prescribed forming condition, comprising:

a state variable detector (16) for measuring, during forming of said material from moment to moment, N state variables including at least one state variable out of the state variables of punch reaction, metal mold temperature, metal mold distortion amount, work piece deformation amount, or work piece temperature, where N is an integer of 2 or more;
a processing condition computer **characterised in that** said processing condition computer, from moment to moment, L processing conditions including at least one processing condition out of processing conditions of forming speed, blank holding force, or metal mold temperature, by using an equation including an influence function matrix indicating a relation between a deviation of each measured state variable to its reference value and a correction amount of the processing condition, where L is an integer of 2 or more; and
a processing condition controller for controlling at least one or more processing conditions out of the processing conditions including a punch or die movement speed, metal mold temperature or blank holding force based on the processing conditions computed by the processing condition computer.

**4.** The device according to claim 3, wherein said equation is

$$C(i) = CO(i) \times (1 + \Sigma \ (T2(i,k) \times (S(k)/SO(k)-1)),$$

where

S(k) (k=1~N) is a k-th state variable,
C(i) (i=1~L) is an i-th processing condition,
SO(k) is a reference value of the k-th state variable,
CO(i) is an initialization value of the i-th processing condition, and
T2 (i, k) is an influence function matrix of N x L values, the k-th x i-th value indicating a relation between a deviation of the measured k-th state variable S(k) to its reference value S0(k) and a correction amount of the i-th processing condition.

**5.** A computer program product to be used in a computer of a press-forming device having a punch (1), die (2) and a blank holder (3), **characterised in that** when executed, causing the computer to perform a press-forming method according to claim 1 or 2.

**6.** A computer readable recording medium on which a computer program product is recorded, **characterised in that** said computer program product is adapted, when executed in a computer of a press-forming device having a punch (1), die (2) and a blank holder (3), to cause the computer to perform a press-forming method according to claim 1 or 2.

**Patentansprüche**

1.  Pressformverfahren, das eine Pressformvorrichtung mit einem Stempel (1), einer Matrize (2) und einen Niederhalter (3) verwendet und ein Material gemäß einer vorgeschriebenen Umformbedingung pressformt, mit den Schritten:

    während des Umformens des Materials von Zeit zu Zeit erfolgendes Messen von N Zustandsvariablen mit mindestens einer Zustandsvariablen aus den Zustandsvariablen Stempelreaktion, Metallformtemperatur, Metallformverformungsbetrag, Werkstückverformungsbetrag oder Werkstücktemperatur, wobei N 2 oder eine größere ganze Zahl ist, **dadurch gekennzeichnet, dass** das Verfahren ferner die Schritte aufweist:

    von Zeit zu Zeit erfolgendes Berechnen von L Bearbeitungsbedingungen mit mindestens einer Bearbeitungsbedingung aus den Bearbeitungsbedingungen Umformgeschwindigkeit, Niederhaltekraft oder Metallformtemperatur durch Verwendung einer Gleichung mit einer Einflussfunktionsmatrix als Angabe einer Beziehung zwischen einer Abweichung jeder während des Umformens gemessenen Zustandsvariablen zu ihrem Bezugswert und eines Korrekturbetrags der Bearbeitungsbedingung, wobei L 2 oder eine größere ganze Zahl ist; und
    Steuern mindestens einer oder mehrerer Bearbeitungsbedingungen aus den Bearbeitungsbedingungen, zu denen Stempel- oder Matrizenbewegungsgeschwindigkeit, Metallformtemperatur oder Niederhaltekraft gehört, auf der Grundlage der durch den Bearbeitungsbedingungs-Berechnungsschritt berechneten Bearbeitungsbedingungen.

2.  Verfahren nach Anspruch 1, wobei die Gleichung

$$C(i) = CO(i) \times (1 + \Sigma (T2(i, k) \times S(k)/SO(k) - 1)))$$

    lautet, wobei

    $S(k)$ ($k = 1 \sim N$) eine k-te Zustandsvariable ist,
    $C(i)$ ($i = 1 - L$) eine i-te Bearbeitungsbedingung ist,
    $SO(k)$ ein Bezugswert der k-ten Zustandsvariablen ist,
    $CO(i)$ ein Initialisierungswert der i-ten Bearbeitungsbedingung ist und
    $T2(i, k)$ eine Einflussfunktionsmatrix von N x L Werten, des k-ten x i-ten Werts als Angabe einer Beziehung zwischen einer Abweichung der gemessenen k-ten Zustandsvariablen $S(k)$ zu ihrem Bezugswert $SO(k)$ und eines Korrekturbetrags der i-ten Bearbeitungsbedingung ist.

3.  Pressformvorrichtung, die einen Stempel (1), eine Matrize (2) und einen Niederhalter (3) hat und ein Material gemäß einer vorgeschriebenen Umformbedingung pressformt, mit:

    einem Zustandsvariablendetektor (16) zum während des Umformens des Materials von Zeit zu Zeit erfolgenden Messen von N Zustandsvariablen mit mindestens einer Zustandsvariablen aus den Zustandsvariablen Stempelreaktion, Metallformtemperatur, Metallformverformungsbetrag, Werkstückverformungsbetrag oder Werkstücktemperatur, wobei N 2 oder eine größere ganze Zahl ist;
    einem Bearbeitungsbedingungscomputer, **dadurch gekennzeichnet, dass** der Bearbeitungsbedingungscomputer von Zeit zu Zeit L Bearbeitungsbedingungen mit mindestens einer Bearbeitungsbedingung aus den Bearbeitungsbedingungen Umformgeschwindigkeit, Niederhaltekraft oder Metallformtemperatur durch Verwendung einer Gleichung mit einer Einflussfunktionsmatrix als Angabe einer Beziehung zwischen einer Abweichung jeder gemessenen Zustandsvariablen zu ihrem Bezugswert und eines Korrekturbetrags der Bearbeitungsbedingung berechnet, wobei L 2 oder eine größere ganze Zahl ist; und
    einer Bearbeitungsbedingungssteuerung zum Steuern mindestens einer oder mehrerer Bearbeitungsbedingungen aus den Bearbeitungsbedingungen, zu denen Stempel- oder Matrizenbewegungsgeschwindigkeit, Metallformtemperatur oder
    Niederhaltekraft gehört, auf der Grundlage der Bearbeitungsbedingungen, die durch den Bearbeitungsbedingungscomputer berechnet werden.

4.  Vorrichtung nach Anspruch 3, wobei die Gleichung

$$C(i) = CO(i) \times (1 + \Sigma (T2(i, k) \times S(k)/SO(k) - 1)))$$

lautet, wobei

S(k) (k = 1 ~ N) eine k-te Zustandsvariable ist,
C(i) (i = 1 ~ L) eine i-te Bearbeitungsbedingung ist,
SO(k) ein Bezugswert der k-ten Zustandsvariablen ist,
CO(i) ein Initialisierungswert der i-ten Bearbeitungsbedingung ist und
T2(i, k) eine Einflussfunktionsmatrix von N x L Werten, des k-ten x i-ten Werts als Angabe einer Beziehung zwischen einer Abweichung der gemessenen k-ten Zustandsvariablen S(k) zu ihrem Bezugswert SO(k) und eines Korrekturbetrags der i-ten Bearbeitungsbedingung ist.

5. Computerprogrammprodukt, das in einem Computer einer Pressformvorrichtung mit einem Stempel (1), einer Matrize (2) und einem Niederhalter (3) zu verwenden ist, **dadurch gekennzeichnet, dass** es bei Ausführung den Computer veranlasst, ein Pressformverfahren nach Anspruch 1 oder 2 durchzuführen.

6. Computerlesbares Aufzeichnungsmedium, auf dem ein Computerprogrammprodukt aufgezeichnet ist, **dadurch gekennzeichnet, dass** das Computerprogrammprodukt bei Ausführung in einem Computer einer Pressformvorrichtung mit einem Stempel (1), einer Matrize (2) und einem Niederhalter (3) geeignet ist, den Computer zu veranlassen, ein Pressformverfahren nach Anspruch 1 oder 2 durchzuführen.

**Revendications**

1. Procédé de formage à la presse utilisant un dispositif de formage à la presse comportant un poinçon (1), une matrice (2) et un support d'ébauche (3), et formant à la presse un matériau selon une condition de formage prescrite, comprenant les étapes consistant à :

mesurer, pendant le formage dudit matériau d'un moment à un autre, N variables d'état comprenant au moins une variable d'état hors des variables d'état composées de la réaction de poinçon, de la température du moule métallique, de la quantité de déformation du moule métallique, de la quantité de déformation de pièce ou de la température de la pièce, où N est un entier de 2 ou plus ; **caractérisé en ce que** le procédé comprend en outre les étapes consistant à :

calculer, d'un moment à un autre, L conditions de traitement comprenant au moins une condition de traitement hors des conditions de traitement composées de la vitesse de formage, de la force de support d'ébauche, ou d'une température de moule métallique, en utilisant une équation comprenant une matrice de fonction d'influence indiquant une relation entre une déviation de chaque variable d'état mesurée pendant le formage par rapport à sa valeur de référence et une quantité de correction de la condition de traitement, où L est un entier de 2 ou plus ; et
commander au moins une ou plusieurs conditions de traitement hors des conditions de traitement comprenant une vitesse de mouvement du poinçon ou de la matrice, la température du moule métallique ou la force de support de l'ébauche en fonction des conditions de traitement calculées par l'étape de calcul de conditions de traitement.

2. Procédé selon la revendication 1, dans lequel ladite équation est :

$$C(i) = CO(i) \times (1 + \Sigma (T2(i,k) \times (S(k) / SO(k) - 1))),$$

où

S(k) (k = 1~N) est une $k^{\text{ème}}$ variable d'état,
C(i) (i = 1~L) est une $i^{\text{ème}}$ condition de traitement,
SO(k) est une valeur de référence de la $k^{\text{ème}}$ variable d'état,

CO(i) est une valeur d'initialisation de la i<sup>ème</sup> condition de traitement, et

T2(i, k) est une matrice de fonction d'influence des valeurs N x L, la valeur k<sup>ème</sup> x i<sup>ème</sup> indiquant une relation entre une déviation de la k<sup>ème</sup> variable d'état mesurée S(k) par rapport à sa valeur de référence SO(k) et une quantité de correction de la i<sup>ème</sup> condition de traitement.

**3.** Dispositif de formage à la presse ayant un poinçon (1), une matrice (2) et un support d'ébauche (3), et formant à la presse un matériau selon une condition de formage prescrite, comprenant :

un détecteur de variable d'état (16) pour mesurer, pendant le formage dudit matériau d'un moment à un autre, N variables d'état comprenant au moins une variable d'état hors des variables d'état composées de la réaction du poinçon, de la température du moule métallique, de la quantité de déformation du moule métallique, de la quantité de déformation de la pièce, ou de la température de la pièce, où N est un entier de 2 ou plus ;
un calculateur de conditions de traitement, **caractérisé en ce que** ledit calculateur de conditions de traitement calcule, d'un moment à un autre, L conditions de traitement comprenant au moins une condition de traitement hors des conditions de traitement composées de la vitesse de formage, de la force de support d'ébauche, ou de la température du moule métallique, en utilisant une équation comprenant une matrice de fonction d'influence indiquant une relation entre une déviation de chaque variable d'état mesurée par rapport à sa valeur de référence et une quantité de correction de la condition de traitement, où L est un entier de 2 ou plus ; et
un contrôleur de condition de traitement pour contrôler au moins une ou plusieurs conditions de traitement hors des conditions de traitement comprenant une vitesse de mouvement du poinçon ou de la matrice, la température du moule métallique ou la force de support de l'ébauche en fonction des conditions de traitement calculées par le calculateur de conditions de traitement.

**4.** Dispositif selon la revendication 3, dans lequel ladite équation est :

$$C(i) = CO(i) \times (1 + \Sigma(T2(i,k) \times (S(k) / SO(k) - 1))),$$

où

S(k) (k = 1~N) est une k<sup>ème</sup> variable d'état,
C(i) (i = 1~L) est une i<sup>ème</sup> condition de traitement,
SO(k) est une valeur de référence de la k<sup>ème</sup> variable d'état,
CO(i) est une valeur d'initialisation de la i<sup>ème</sup> condition de traitement, et
T2(i, k) est une matrice de fonction d'influence des valeurs N x L, la valeur k<sup>ème</sup> x i<sup>ème</sup> indiquant une relation entre une déviation de la k<sup>ème</sup> variable d'état mesurée S(k) par rapport à sa valeur de référence SO(k) et une quantité de correction de la i<sup>ème</sup> condition de traitement.

**5.** Produit-programme informatique à utiliser dans un ordinateur d'un dispositif de formage à la presse ayant un poinçon (1), une matrice (2) et un support d'ébauche (3), **caractérisé en ce que** lorsqu'il est exécuté, amène l'ordinateur à réaliser un procédé de formage à la presse selon la revendication 1 ou 2.

**6.** Support d'enregistrement lisible par ordinateur sur lequel un produit-programme informatique est enregistré, **caractérisé en ce que** ledit produit-programme informatique est adapté, lorsqu'il est exécuté dans un ordinateur d'un dispositif de formage à la presse ayant un poinçon (1), une matrice (2) et un support d'ébauche (3), pour amener l'ordinateur à réaliser un procédé de formage à la presse selon la revendication 1 ou la revendication 2.

FIG. 1

EP 2 289 644 B1

## FIG. 2

START

MATERIAL CHARACTERISTIC (P(i)) INPUT ~S201

REFER TO REFERENCE PROCESSING CONDITION ~S202

INITIALIZATION OF PROCESSING CONDITION (C(i)) ~S203

PROCESSING START ~S204

STATE VARIABLE (S(i)) MEASUREMENT ~S205

STATE VARIABLE DEVIATION (ΔS(i)) CALCULATION ~S206

PROCESSING CONDITION (C(i)) CORRECTION ~S207

S208
PROCESSING COMPLETION ? NO

YES

END

FIG. 3

EP 2 289 644 B1

| | | MATERIAL CHARACTERISTIC VALUE (P) | | | | | | | | | | | | |
|---|---|---|---|---|---|---|---|---|---|---|---|---|---|---|
| | | SHEET THICKNESS | YIELD STRENGTH | TENSILE STRENGTH | ELONGATION | n VALUE | r VALUE | PLASTICITY COEFFICIENT | HARDNESS | TEMPERATURE | ROUGHNESS | FRICTION COEFFICIENT | LUBRICANT FILM THICKNESS | ...... |
| FORMING CONDITION INITIALIZATION VALUE (C0) | FORMING SPEED | 0.2 | 0.2 | 0.3 | 0.4 | 0.5 | 0.2 | 0.3 | 0.2 | −0.1 | −0.2 | −0.5 | 0.5 | *.* |
| | BLANK-HOLDING FORCE | 0.4 | 0.4 | 0.6 | 0.8 | 1.0 | 0.4 | 0.6 | 0.4 | −0.2 | −0.4 | −1.0 | 1.0 | *.* |
| | METAL MOLD TEMPERATURE | 0.0 | 0.0 | 0.0 | 0.0 | 0.0 | 0.0 | 0.0 | 0.0 | 0.0 | 0.0 | 0.0 | 0.0 | *.* |
| | ...... | *.* | *.* | *.* | *.* | *.* | *.* | *.* | *.* | *.* | *.* | *.* | *.* | *.* |

# FIG. 4

| FORMING CONDITION CORRECTION AMOUNT (C) | | STATE VARIABLE (S) | | | | | | | | | |
|---|---|---|---|---|---|---|---|---|---|---|---|
| | | PUNCH REACTION | METAL MOLD TEMPERATURE | METAL MOLD DISTORTION No.1 | METAL MOLD DISTORTION No.2 | METAL MOLD DISTORTION No.3 | DISPLACEMENT No.1 | DISPLACEMENT No.2 | DISPLACEMENT No.3 | MATERIAL TEMPERATURE | ...... |
| | FORMING SPEED | −1.0 | −0.5 | −0.2 | −0.2 | −0.2 | −0.2 | −0.2 | −0.2 | −0.5 | *.* |
| | BLANK-HOLDING FORCE | −1.0 | −0.5 | −0.2 | −0.2 | −0.2 | −0.2 | −0.2 | −0.2 | −0.5 | *.* |
| | METAL MOLD TEMPERATURE | 0.0 | −1.0 | 0.0 | 0.0 | 0.0 | 0.0 | 0.0 | 0.0 | 1.0 | *.* |
| | ...... | *.* | *.* | *.* | *.* | *.* | *.* | *.* | *.* | *.* | *.* |

EP 2 289 644 B1

## FIG. 5

|  | P(1) (SHEET THICKNESS /mm) | P(2) (YIELD STRENGTH /MPa) | P(3) (TENSILE STRENGTH /MPa) | P(4) (TOTAL ELONGATION /%) | P(5) (HARDNESS /Hv) |
|---|---|---|---|---|---|
| COIL TYPICAL MECHANICAL PROPERTIES | 1.175~ 1.225 | 145 | 285 | 43 | 145 |
| REFERENCE VALUE | 1.200 | 140 | 280 | 42 | 140 |

## FIG. 6

| STANDARD PROCESSING CONDITION | VALUE |
|---|---|
| CO (1) (FORMING SPEED) | 50mm/sec. |
| CO (2) (BLANK-HOLDING FORCE) | 50kN |

## FIG. 7

|  | P(1) (SHEET THICKNESS) | P(2) (YIELD STRENGTH) | P(3) (TENSILE STRENGTH) | P(4) (TOTAL ELONGATION) | P(5) (HARDNESS) |
|---|---|---|---|---|---|
| CO (1) (FORMING SPEED) | 0.2 | 0.2 | 0.3 | 0.4 | 0.2 |
| CO (2) (BLANK-HOLDING FORCE) | 0.4 | 0.4 | 0.6 | 0.8 | 0.4 |

EP 2 289 644 B1

FIG. 8

|  | S(1) PUNCH REACTION 10mm | S(2) PUNCH REACTION 20mm | S(3) PUNCH REACTION 30mm | S(4) METAL MOLD TEMPERATURE (AT FORMING START) |
|---|---|---|---|---|
| REFERENCE VALUE | 20kN | 40kN | 65kN | 30°C |

FIG. 9

|  | S(1)<br>PUNCH<br>REACTION<br>10mm | S(2)<br>PUNCH<br>REACTION<br>20mm | S(3)<br>PUNCH<br>REACTION<br>30mm | S(4)<br>METAL MOLD<br>TEMPERATURE<br>(AT FORMING START) |
|---|---|---|---|---|
| C(1)<br>(FORMING SPEED) | −1.0 | −1.0 | −1.0 | −0.5 |
| C(2)<br>(BLANK−HOLDING FORCE) | −1.0 | −1.0 | −1.0 | −0.5 |

EP 2 289 644 B1

FIG. 10

FIG. 11

FIG. 12

## FIG. 13

EP 2 289 644 B1

**EP 2 289 644 B1**

## REFERENCES CITED IN THE DESCRIPTION

**Patent documents cited in the description**

- EP 0675419 A
- JP HEI7266100 B
- JP HEI5285700 B
- JP HEI6246499 B
- JP HEI7265957 B
- JP HEI10128451 B
- JP HEI8300048 B